# EUROPÄISCHE PATENTSCHRIFT

(11) **EP 1 609 636 B1**
(45) Veröffentlichungstag und Bekanntmachung des Hinweises auf die Patenterteilung: **23.01.2008**
(21) Anmeldenummer: 05004511.1
(22) Anmeldetag: 02.03.2005
(51) Int. Cl.: B60G 21/073, B60G 17/015, B62D 5/06, B60G 21/055

(54) **Hydraulische Steuervorrichtung**
Hydraulic control device
Dispositf de commande hydraulique

(30) Priorität: 22.06.2004 DE 102004030009
(43) Veröffentlichungstag der Anmeldung: 28.12.2005
(73) Patentinhaber: Hydac Electronic GmbH, 66128 Saarbrücken (DE)
(72) Erfinder: Kattler, Frank, 66346 Püttlingen (DE); Daniel, Thomas, 66822 Lebach (DE); Herold, Frank, 66129 Saarbrücken (DE)
(74) Vertreter: Bartels & Partner

(56) Entgegenhaltungen:
- EP-A- 0 850 151
- EP-A- 1 238 834
- WO-A-03/093041
- DE-A1- 3 802 954
- DE-A1- 4 327 044
- DE-A1- 4 337 765
- DE-C1- 19 846 394

## Beschreibung

Die Erfindung betrifft eine hydraulische Steuervorrichtung, insbesondere für Hydroantriebe, wie Schwenkmotoren und Differentialzylinder bei Kraftfahrzeugen, mit einer hydraulischen Versorgungseinrichtung, die mindestens einen Pumpen- und einen Tankanschluß aufweist und mit fluidführenden Verbindungsleitungen zwischen dem jeweiligen Hydroantrieb und den Anschlüssen.

Durch die gattungsgemäße DE 43 37 765 A1 ist ein Zweikreishydrauliksystem bekannt für eine aktive Fahrwerksregelung zur Unterdrückung der Rollbewegung eines Kraftfahrzeuges mittels eines Stabilisators. Die bekannte Lösung umfaßt eine Versorgungspumpe, eine Primärleitung zu mindestens einem Aktuator einer Vorderachse und einer Hinterachse des Fahrzeuges, sowie eine Anzahl von Ventilen, die die Versorgung der Aktuatoren beeinflussen. Ferner ist zur Realisierung der bekannten Lösung eine Anzahl von einstellbaren Druckbegrenzungsventilen vorgesehen, wobei beide Hydraulikkreise der Aktuatoren für die Hinterachse und die Vorderachse von einer gemeinsamen Versorgungspumpe gespeist werden und über ein Stromregelventil erfolgt die Volumenstromverteilung. Hierbei bekommt eine Achse eine Primärversorgung zugeordnet und die andere Achse wird mit einem Volumenstrom versorgt, der dem Überschuß der Versorgungspumpe gegenüber der Primärversorgung entspricht.

Mit der bekannten Lösung soll sichergestellt werden, dass für eine Achse eine gesicherte Versorgung erreicht ist, so dass eine gezielte Abstimmung der Stabilisatoren für den Fall vorgenommen werden kann, wenn innerhalb des Hydraulikgesamtsystems Undichtigkeiten auftreten. Zusätzlich bleibt bei niedrigen Motordrehzahlen eine gezielte Versorgung einer Achse erhalten. Da gewöhnlich bei einem Kraftfahrzeug der Stabilisator an der Vorderachse stärker auszulegen ist, um tendenziell ein eher untersteuerndes Fahrverhalten zu erhalten, das dem Durchschnittsfahrer mit seinen fahrerischen Fähigkeiten entgegenkommt, ist ein gesichertes, die Vorderachse mit der Primärversorgung koppelndes Steuersystem erreicht. Die bei der bekannten Lösung zum Einsatz kommenden Proportional-Druckbegrenzungsventile weisen insbesondere bei den dünnflüssigen Fluidmedien eine schlechte Stabilität auf, d.h. sie beginnen im Betrieb zu "schwingen", was insbesondere dann schädlich ist, wenn diese Ventile Sonderfunktionen erfüllen sollen, beispielsweise, wie aufgezeigt, bei der aktiven Fahrwerksregelung oder bei Kraftfahrzeugservolenkungen und dergleichen mehr. Des weiteren kann nicht ausgeschlossen werden, dass bei dem Einsatz von Schaltventilen bei der bekannten Lösung in Form von 4/3-Wege-Ventilen es im Betrieb zu Hemmnissen kommt, was die Gefahr des Ausfalls des jeweiligen hydraulischen Regelungssystems mit sich bringen kann.

Durch die DE 196 49 187 C2 ist eine hydraulische Stabilisierungseinrichtung bekannt für ein zweiachsiges Kraftfahrzeug, mit einem für die Fahrzeug-Vorderachse und einem für die Fahrzeug-Hinterachse vorgesehenen hydraulischen Stellglied sowie mit jeweils einem zwischen einer Druckleitung und einer Tankleitung angeordneten Schaltventil, das derart einstellbar ist, dass die Druckleitung mit einer ersten Arbeitskammer und die Tankleitung mit einer zweiten Arbeitskammer des jeweiligen hydraulischen Stellgliedes bzw. umgekehrt verbunden. ist, sowie mit einem einstellbaren Druckbegrenzungsventil, das in einer Verbindungsleitung zwischen der der Vorderachse zugeordneten Druckleitung und der Tankleitung parallel zum Vorderachs-Schaltventil vorgesehen ist, und mit einem weiteren Druckbegrenzungsventil, durch welches der in der Druckleitung des Hinterachs-Schaltventils herrschende Druck auf einen Wert einstellbar ist, der nicht höher als der derjenige in der Vorderachs-Druckleitung ist. Ferner ist das weitere Druckbegrenzungsventil in der Verbindungsleitung stromab des erstgenannten Druckbegrenzungsventils angeordnet, wobei die Hinterachs-Druckleitung zwischen den beiden Druckbegrenzungsventilen von der Verbindungsleitung abzweigt. Bei einer weiteren Ausführungsform der bekannten Lösung kann an die Stelle des weiteren Druckbegrenzungsventils ein einstellbares Druckminderventil treten.

Mit der bekannten Lösung ist sichergestellt, dass der Hydraulikdruck am Hinterachs-Aktuator nie größer wird als derjenige am Vorderachs-Aktuator, wobei der Hydraulikdruck am Hinterachs-Aktuator unter Berücksichtigung dieser Randbedingung beliebig einstellbar sein soll. Die bekannte Lösung setzt zur Realisierung wiederum Druckbegrenzungs- und Schaltventile ein mit den bereits beschriebenen Nachteilen. Bei der bekannten Lösung sind die Druckbegrenzungsventile in einem Nebenpfad zwischen den fluidführenden Verbindungsleitungen von Pumpen- und Tankanschluß geschaltet und wirken somit nur indirekt auf den jeweiligen Hydroantrieb ein, sei es in Form eines hydraulischen Schwenkantriebes, sei es in Form eines hydraulischen Differentialzylinders für die Roll- oder Wankstabilisierung. Demgemäß ist mit der bekannten Lösung nur die Aufgabe lösbar, den Hydraulikdruck am Hinterachs-Aktuator nie größer werden zu lassen als am Vorderachs-Aktuator. Eine freie Ansteuerbarkeit mit einer Vielzahl an Lösungsmöglichkeiten, beispielsweise neben einer Wankstabilisierung auch eine Nickstabilisierung sicherzustellen oder die Hydraulikdrücke an beiden Achsen gleich oder vorgebbar voneinander verschieden einzustellen, ist mit der bekannten Lösung nicht möglich.

Ausgehend von diesem Stand der Technik stellt sich daher die Erfindung die Aufgabe, die bekannten Lösungen dahingehend weiter zu verbessern, dass sich mit der hydraulischen Steuervorrichtung eine Vielzahl an Steuermöglichkeiten realisieren läßt, dass ein hohes Maß an Funktionssicherheit erreicht ist, was der Sicherheit zugute kommt, bei gleichzeitig kostengünstiger Realisierung und bei einem geringen Wartungsaufwand. Eine dahingehende Aufgabe löst eine hydraulische Steuervorrichtung mit den Merkmalen des Patentanspruches 1 in seiner Gesamtheit.

Dadurch, dass gemäß dem kennzeichnenden Teil des Patentanspruches 1 in jede Verbindungsleitung ein Druckregelventil, insbesondere Proportional-Druckregelventil, vorzugsweise gleicher Bauart, geschaltet ist, sind Ventile verwendet, die in ihrem Verhalten stabiler sind und über eine bessere Dynamik verfügen als die bekannten, hierfür zum Einsatz kommenden Druckbegrenzungs- und/oder Druckminderventile. Für den jeweiligen Hydro-oder Servoantrieb ist ein eigenständiges Proportional-Druckregelventil vorgesehen und ferner jedem Versorgungszweig zugeordnet, so dass sich jeder der dahingehenden Versorgungspfade getrennt ansteuern läßt. Dies führt zu einem hohen Maß an Variabilität, was die möglichen Einsatzfälle anbelangt. So ist es beispielsweise für eine Wankstabilisierung möglich, wie bei der bekannten Lösung nach der DE 196 49 187 C2, den Hydraulikdruck am Hinterachs-Aktuator nie größer werden zu lassen als derjenige am Vorderachs-Aktuator; es besteht aber auch die Möglichkeit der umgekehrten Ansteuerung oder der gleichen Ansteuerung für beide Achs-Aktuatoren mit dem jeweils selben Hydraulikdruck. Darüber hinaus besteht die Möglichkeit, mit der erfindungsgemäßen Steuervorrichtung nicht nur eine Wankstabilisierung zu erreichen, sondern gleichzeitig und überlagernd für ein Fahrzeug auch eine Nickstabilisierung quer zur Fahrzeuglängsachse. Ferner eignet sich die erfindungsgemäße Lösung auch besonders gut bei servounterstützten Lenksystemen. Mit der erfindungsgemäßen Lösung ist es möglich, über die jeweiligen Druckregelventile, insbesondere Proportional-Druckregelventile, eine definierte Ansteuerung des Druckes in der jeweiligen Steuerkammer des Hydroantriebes vorzunehmen. Demgemäß ist es beispielsweise möglich, den Arbeitsdruck in einer Kammer zu erhöhen und gleichzeitig den Druck in der korrespondierenden anderen Kammer des Hydroantriebes zu erniedrigen oder abzusenken. Die dahingehenden Vorgänge lassen sich kontinuierlich durchführen und es ist nicht, wie im Stand der Technik, notwendig, erst durch Umschalten eines Ventils die dahingehenden Vorgänge einzuleiten. Mithin ist mit der erfindungsgemäßen Lösung eine Dynamikverbesserung für den jeweiligen Steuerungs- oder Regelungsvorgang für den Hydroantrieb deutlich erreicht. Des weiteren wird diese Art an Ansteuerung als komfortabler empfunden und im Hinblick auf etwa bestehende Druckniveau-Unterschiede kommt es im System nicht zu schädlichen Druckstößen.

Bei einer bevorzugten Ausführungsform der hydraulischen Steuervorrichtung sind die einzelnen Proportional-Druckregelventile auf ihren jeweiligen Eingangsseiten zum einen fluidführend mit dem Pumpenanschluß und zum anderen mit dem Tankanschluß verbunden, wobei die Eingangsseiten mit dem Pumpenanschluß fluidführend miteinander verbunden sind und getrennt zu den Eingangsseiten mit dem Tankanschluß, die wiederum untereinander fluidführend in Verbindung sind. Auf diese Art und Weise entsteht eine Art Parallelschaltung für die einzelnen Proportional-Druckregelventile, die nahezu zeitgleich von der Steuereinrichtung betätigbar sind, und des weiteren lassen sich die fluidführenden Wege im wesentlichen für alle Komponenten der hydraulischen Steuervorrichtung mit gleicher Baulänge versehen, was zum einen die hydraulische Ansteuerung erleichtert und zum anderen diese besonders präzise werden läßt. Durch den Einsatz der Proportional-Druckregelventile in Parallelschaltung kann darüber hinaus auf weitere Wege- oder Schaltventile im wesentlichen verzichtet werden, so dass ein Störeinflußfaktor beseitigt ist, was zum einen die Funktionssicherheit deutlich erhöhen hilft und zum anderen die Herstell- und Wartungskosten senkt.

Bei einer besonders bevorzugten Ausführungsform der hydraulischen Steuervorrichtung ist zwischen dem jeweiligen Proportional-Druckregelventil und dem Pumpenanschluß der hydraulischen Versorgungseinrichtung an mindestens eine fluidführende Verbindungsleitung mindestens ein Hydrospeicher, insbesondere Membranspeicher, angeschlossen.

Kommt die hydraulische Steuereinrichtung bei einer Servolenkung zum Einsatz, ist mit den beschriebenen Merkmalen eine fahrzustandsabhängige Speicherladeschaltung erreicht, wobei es im Zuge einer Energieeinsparung nicht notwendig ist, den Hydrospeicher immer zwischen vorgegebenen Druckwerten vorgespannt zu halten, sondern vielmehr ist es bei einem entsprechend eingesetzten intelligenten Regler möglich, z.B. bei einer Autobahnfahrt den Speicherladedruck so weit abzusenken, dass die erforderliche Unterstützungskraft noch aufgebaut werden kann. Dies ergibt zum einen eine geringere Leckage und zum anderen ist hierdurch ein geringerer Energieverbrauch der Gesamteinrichtung erreicht.

Kommt eine dahingehende Speicherladeschaltung bei einer Wank-und/oder Nickstabilisierung zum Einsatz, erfolgt die Speicherladung des Hydrospeichers grundsätzlich über eine Hydropumpe der hydraulischen Versorgungseinrichtung, und sofern kein Volumenstrom mehr abgefordert wird, kann der Volumenstrom der Hydropumpe entsprechend zurückgefahren werden. Der Speicherladedruck wird wiederum fahrzustandsabhängig geregelt, d.h. bei Fahrzuständen, bei denen keine hohen Drücke bzw. Volumenströme zu erwarten sind, beispielsweise bei langsamer Fahrt, kann der Speicherladedruck sinnfällig abgesenkt werden, was wiederum zu geringen Leckagemengen und zu der gewünschten Energieeinsparung führt.

Weitere vorteilhafte Ausgestaltungen der erfindungsgemäßen hydraulischen Steuervorrichtung sind Gegenstand der sonstigen Unteransprüche.

Im folgenden wird die hydraulische Steuervorrichtung anhand zweier Ausführungsbeispiele nach der Zeichnung näher erläutert. Dabei zeigen in der Art von hydraulischen Schaltplänen die
- Fig.1: den Einsatz der hydraulischen Steuereinrichtung bei einer Servolenkung;
- Fig.2: die hydraulische Steuereinrichtung bei einem Einsatz als aktive Fahrwerksregelung zur Unterdrückung der Roll- oder Wankbewegungen eines Kraftfahrzeuges.

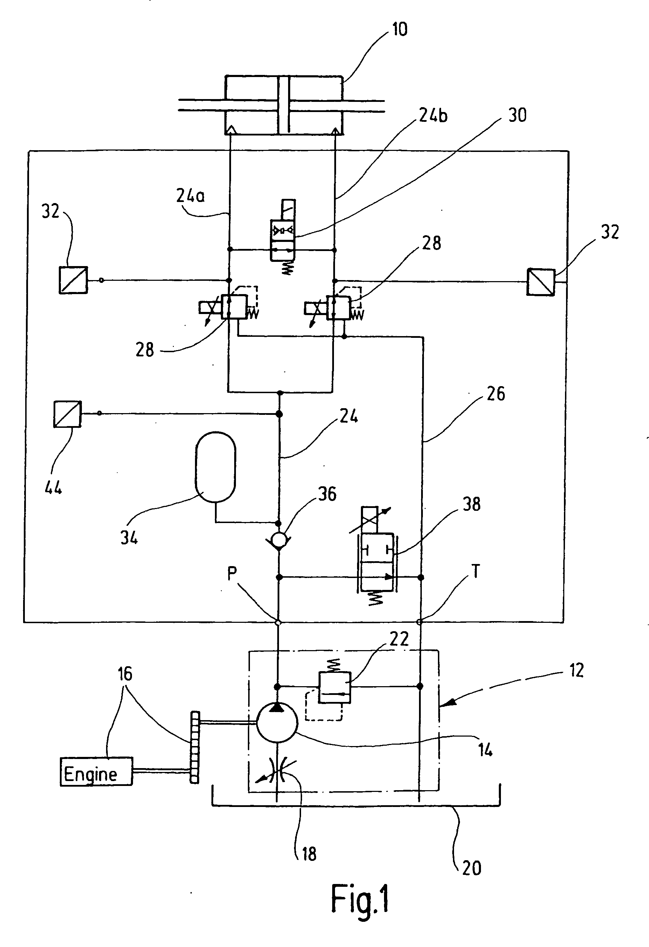

Die hydraulische Steuervorrichtung dient insbesondere gemäß der Ausführungsform nach der Fig.1 dem Ansteuern eines Hydroantriebes in Form eines Differentialzylinders 10. Der dahingehende Differentialzylinder 10 ist Teil eines hydraulischen Servolenksystems bei einem Kraftfahrzeug (nicht dargestellt). Dahingehende Servolenkungen und ihr Aufbau sind üblich, so dass an dieser Stelle hier auf Einzelheiten nicht mehr näher eingegangen wird. Die in der Fig.1 dargestellte hydraulische Steuervorrichtung ist mit einer als Ganzes mit 12 bezeichneten hydraulischen Versorgungseinrichtung versehen. Die Versorgungseinrichtung 12 weist eine Hydropumpe 14 auf, beispielsweise in der Art einer Pumpe mit Volumenstromregelung, insbesondere in Form einer Konstantpumpe mit einer Saugdrossel 18 auf der Ansaugseite. Die Hydropumpe 14 ist über eine Kraftfahrzeug-Motorgetriebeeinheit 16 über die einstellbare Saugdrossel 18 mit Fluid, insbesondere Hydraulikmedium, aus einem entsprechenden Tank 20 versorgbar. Ausgangsseitig ist die Hydropumpe 14 über ein Druckbegrenzungsventil 22 gegenüber dem Tank 20 abgesichert. Des weiteren ist die Versorgungseinrichtung 12 mit einem Pumpenanschluß P und einem Tankanschluß T versehen. Ferner verlaufen fluidführende Verbindungsleitungen 24,26 zwischen der Versorgungseinrichtung 12 und dem Hydroantrieb in Form des Differentialzylinders 10. Die fluidführende Verbindungsleitung 24 geht in zwei Teilstränge 24a,b über und in jeden Strang ist ein Proportional-Druckregelventil 28 geschaltet. Des weiteren münden die beiden Teilstränge 24a,b fluidführend in die Arbeitsräume oder Kolbenräume des Differentialzylinders 10 ein. Zwischen Differentialzylinder 10 und den beiden Proportional-Druckregelventilen 28 ist zwischen die beiden Teilstränge 24a, 24b ein 2/2-Wege-Sitzventil 30 geschaltet, das eine Fail-Safe-Sicherheitsschaltung erlaubt. Ferner ist an beide Teilstränge 24a,b ein Drucksensor 32 angeschlossen. Während die beiden Proportional-Druckregelventile 28 sowohl eingangsseitig als auch ausgangsseitig in die Teilstränge 24a,b münden, sind diese auf ihrer weiteren Eingangsseite an die fluidführende Verbindungsleitung 26 angeschlossen und dergestalt mit dem Tankanschluß T verbunden.

In die fluidführende Verbindungsleitung 24 ist im Nebenzweig ein Hydrospeicher, insbesondere Membranspeicher 34, angeschlossen. Der dahingehende Hydrospeicher 34 ist über ein übliches Rückschlagventil 36, das in Richtung des Pumpenanschlusses P schließt, gesichert. In fluidführender Richtung vor dem Rückschlagventil ist zwischen die fluidführenden Leitungen 24,26 ein Schaltventil, insbesondere in Form eines proportionalen 2/2-Wege-Bypassventils 38 geschaltet. Die beiden Proportional-Druckregelventile 28 sind über eine nicht näher dargestellte Steuerung, in der entsprechende Steuerkennlinien abgespeichert sind, ansteuerbar, wobei die Steuerung über die Drucksensoren 32 den anstehenden Arbeitsdruck in den Teilsträngen 24a,b der fluidführenden Versorgungsleitung 24 als Eingabewert berücksichtigt. Mit der erfindungsgemäßen hydraulischen Steuervorrichtung ist bei der Ausführungsform nach der Fig.1 eine Art Closed-Center-Lenkung mit fahrzustandsabhängiger Speicherladeschaltung realisiert, wobei es nicht zwingend notwendig ist, den Hydrospeicher 34 immer auf seinem vorgesehenen Arbeitsdruck zu halten. Vielmehr ist es mit einer intelligenten Steuerung möglich, beispielsweise bei einer Autobahnfahrt, den Speicherladedruck so weit abzusenken, dass die erforderliche Unterstützungskraft zwar noch aufgebaut werden kann, dass aber eine Aufladung des Speichers auf den vollen Vorspanndruck nicht notwendig ist. Dies hat zum einen den Vorteil, dass geringere Leckageströme auftreten, die zu beherrschen sind, und des weiteren ist ein geringerer Energieverbrauch notwendig, so dass die Motorgetriebeeinheit 16 entsprechend entlastet ist, was den Kraftstoffbedarf des Fahrzeuges senken hilft.

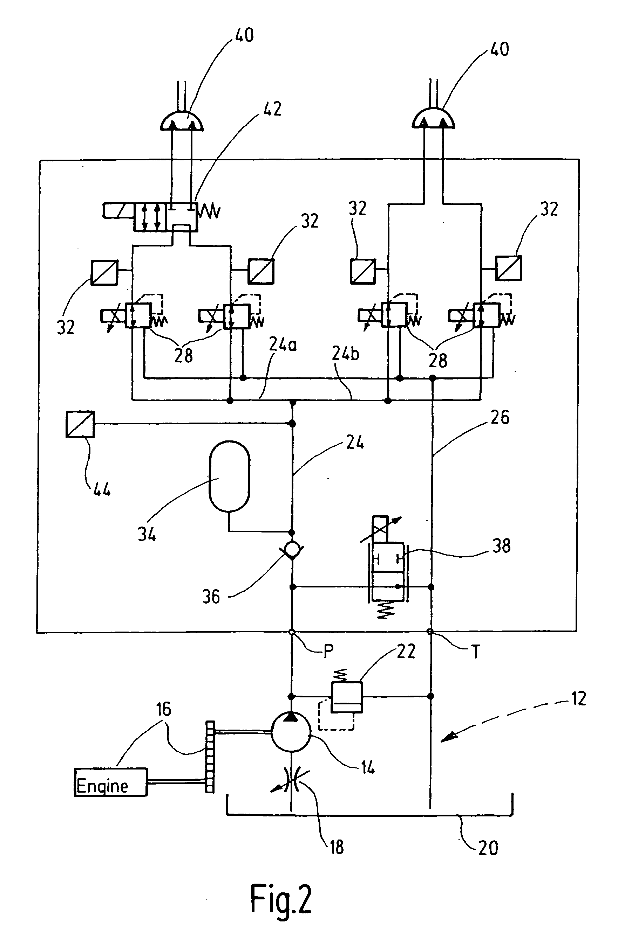

Bei der Ausführungsform nach der Fig.2, die eine sog. Closed-Center-Hydrauliksystemlösung für eine aktive Fahrwerksregelung zur Unterdrükkung der Roll- oder Wankbewegung eines Kraftfahrzeuges betrifft, werden für dieselben Baukomponenten, wie in der Fig.1 angegeben, auch dieselben Bezugszeichen eingesetzt. Die bisher zu den dahingehenden Bauteilen getroffenen Ausführungen gelten insoweit auch entsprechend für die vorliegende Ausführungsform nach der Fig.2.

Anstelle des Differentialzylinders 10 nach der Fig.1 setzt die Lösung nach der Fig.2 als Hydroantrieb für eine jeweilige Kraftfahrzeugachse Schwenkmotoren 40 ein. Die dahingehenden Schwenk- oder Drehmotoren 40, die die Schenkel eines mechanischen Stabilisators (nicht dargestellt) entgegensetzt einstellen können, die ihrerseits an Radführungslenkern oder Teilen davon angelenkt sind, bilden dergestalt die Stabilisierungseinrichtung zur Wankstabilisierung für ein Kraftfahrzeug. Solche Stabilisierungseinrichtungen sind dem Grunde nach bekannt, so dass an dieser Stelle hierauf nicht mehr näher eingegangen wird.

Bei der hier vorliegenden geänderten Ausführungsform ist für jeden Schwenkmotor 40 ein Paar an zueinander parallel geschalteten Proportional-Druckregelventilen 28 vorgesehen, so dass insgesamt vier Ventile 28 hier zum Einsatz kommen. Demgemäß teilen sich die Teilstränge 24a, 24b vor Eingang in das jeweilige Ventil 28 nochmals auf. Als zusätzliches Sicherheits- oder Absperrventil 42 dient ein 4/2-Wege-Schaltventil, das fluidführend unmittelbar vor dem Schwenkmotor 40 eingesetzt ist, das der Vorderachse des Kraftfahrzeuges zugeordnet ist.

Bei der Ausführungsform nach der Fig.2 erfolgt die Speicherladung für den Hydrospeicher 34 über die Hydropumpe 14. Über das Bypassventil 38 wird der verbleibende Volumenstrom der Hydropumpe dann zum Tankanschluß T hin gefördert und dadurch ein druckloser Umlauf erreicht, was zu weiteren Energieeinspareffekten führt. Der Speicherladedruck wird vorzugsweise fahrzustandsabhängig geregelt, d.h. bei Fahrzuständen, bei denen keine hohen Drücke bzw. hohe Volumenströme zu erwarten sind, beispielsweise bei langsamer Fahrt, wird der Speicherladedruck für den Hydrospeicher 34 abgesenkt. Dies führt wiederum zu geringeren Leckagen und zu einer Energieeinsparung für die Motorantriebseinheit 16.

Durch die Steuerung der jeweils rechten bzw. linken Kammer der Schwenkmotoren 40 über die Proportional-Druckregelventile 38 läßt sich ohne weiteren Schaltventileinsatz eine unmittelbare Ansteuerung erreichen mit einer Vielzahl an Ansteuermöglichkeiten, so dass beispielsweise die bekannte Wankstabilisierung noch um eine überlagerte Nickstabilisierung ergänzt werden kann. Die Proportional-Druckregelventile 28 arbeiten sehr zuverlässig und neigen nicht zu schädlichen Schwingungen im Betrieb der Steuervorrichtung. Neben der bereits aufgezeigten Ansteuerung der Proportional-Druckregelventile 28 über die Drucksensoren 32 kann auch der Druckwert des Hydrospeichers 34 mit einfließen, der über einen Drucksensor 44 erfaßbar ist. Des weiteren können die Schwenkmotoren 40 gleichfalls in der Art von hydraulischen Differentialzylindern (nicht dargestellt) ausgebildet sein.

## Patentansprüche

1. Hydraulische Steuervorrichtung, insbesondere für Hydroantriebe, wie Schwenkmotoren (40) und Differentialzylinder (10) bei Kraftfahrzeugen, mit einer hydraulischen Versorgungseinrichtung (12), die mindestens einen Pumpen-(P) und einen Tankanschluß (T) aufweist und mit fluidführenden Verbindungsleitungen (24,26) zwischen dem jeweiligen Hydroantrieb und den Anschlüssen (P,T), **dadurch gekennzeichnet, dass** in jede Verbindungsleitung (24,26) ein Druckregelventil, insbesondere Proportional-Druckregelventil (28), vorzugsweise gleicher Bauart, geschaltet ist.

2. Hydraulische Steuervorrichtung nach Anspruch 1, **dadurch gekennzeichnet, dass** die einzelnen Proportional-Druckregelventile (28) auf ihren jeweiligen Eingangsseiten zum einen fluidführend mit dem Pumpenanschluß (P) und zum anderen mit dem Tankanschluß (T) verbunden sind und dass die Eingangsseiten mit dem Pumpenanschluß (P) fluidführend miteinander verbunden sind und getrennt zu den Eingangsseiten mit dem Tankanschluß (T), die wiederum miteinander fluidführend in Verbindung sind.

3. Hydraulische Steuervorrichtung nach Anspruch 1 oder 2, **dadurch gekennzeichnet, dass** zwischen dem jeweiligen Proportional-Druckregelventil (28) und dem Pumpenanschluß (P) der hydraulischen Versorgungseinrichtung (12) an mindestens eine fluidführende Verbindungsleitung (24) mindestens ein Hydrospeicher (34), insbesondere Membranspeicher, angeschlossen ist.

4. Hydraulische Steuervorrichtung nach Anspruch 3, **dadurch gekennzeichnet, dass** der Hydrospeicher (34) über ein Rückschlagventil (36) gesichert ist, das in Richtung der Versorgungseinheit (12) sperrt.

5. Hydraulische Steuervorrichtung nach einem der Ansprüche 1 bis 4, **dadurch gekennzeichnet, dass** in jede fluidführende Verbindungsleitung (24,26) zwischen den Proportional-Druckregelventilen (28) und den Hydroantrieben (10,40) ein Drucksensor (32) angeordnet ist, der seine Meßdaten an eine Steuerung weitergibt, die mit einem Steuerprogramm versehen anhand interner Steuerkennlinien die Ansteuerung der Proportional-Druckregelventile (28) vornimmt zwecks Durchführen einer Lenk- und/oder Fahrwerksregelung.

6. Hydraulische Steuervorrichtung nach einem der Ansprüche 3 bis 5, **dadurch gekennzeichnet, dass** zwischen der hydraulischen Versorgungseinrichtung (12) und dem Hydrospeicher (34) zwischen den fluidführenden Verbindungsleitungen (24,26) von Pumpen-(P) und Tankanschluß (T) ein Schaltventil, insbesondere ein proportionales Bypaßventil (38) geschaltet ist.

7. Hydraulische Steuervorrichtung nach einem der Ansprüche 1 bis 6, **dadurch gekennzeichnet, dass** für eine aktive Fahrwerksregelung sowohl der Vorderachse als auch der Hinterachse jeweils ein Paar an gleich ausgestalteten Proportional-Druckregelventilen (28) zugeordnet ist und dass alle Proportional-Druckregelventile (28) parallel zueinander geschaltet sind.

## Claims

1. Hydraulic control device, in particular for hydraulic drives, such as rotary actuators (40) and differential cylinders (10) for motor vehicles, with a hydraulic supply means (12) comprising at least one pump (P) and one tank (T) connection, and with fluid conveying connection lines (24, 26) between the relevant hydraulic drive and the connections (P, T), **characterised in that** a pressure regulating valve, in particular a proportional pressure regulating valve (28), preferably of identical construction, is located in each connection line (24, 26).

2. Hydraulic control device according to Claim 1, **characterised in that** the individual proportional pressure regulating valves (28) are connected with the pump connection (P) in a fluid conveying way on their relevant inlet sides on the one hand, and with the tank connection (T) on the other hand, and **in that** the inlet sides are connected with the pump connection (P) and with each other in a fluid conveying way, and are connected separately on their inlet sides with the tank connection (T), which are once more connected with each other in a fluid conveying way.

3. Hydraulic control device according to Claim 1 or 2, **characterised in that** at least one hydro store (34), in particular a membrane store, is connected to at least one fluid conveying connection line (24) between the relevant proportional pressure regulating valve (28) and the pump connection (P) of the hydraulic supply means (12).

4. Hydraulic control device according to Claim 3, **characterised in that** the hydro store (34) is secured by means of a non-return valve (36) which blocks in the direction of the supply means (12).

5. Hydraulic control device according to one of the Claims 1 to 4, **characterised in that** a pressure sensor (32) is located in each fluid conveying connection line (24, 26) between the proportional pressure regulating valves (28) and the hydraulic drives (10, 40), which transmits measured data to a controller, which is in turn equipped with a control programme and effects the control of the proportional pressure regulating valves (28) by means of internal control parameters for carrying out a steering and/or drive control.

6. Hydraulic control device according to one of the Claims 3 to 5, **characterised in that** a switching valve, in particular a proportional by-pass valve (38), is located between the fluid conveying connection lines (24, 26) of the pump (P) and tank connection (T) between the hydraulic supply means (12) and the hydro store (34).

7. Hydraulic control device according to one of the Claims 1 to 6, **characterised in that** a pair of identically designed proportional pressure regulating valves (28) each is allocated to the front axle as well as the rear axle for an active drive control, and **in that** all proportional pressure regulating valves (28) are positioned in parallel with each other.

## Revendications

1. Dispositif de commande hydraulique, notamment pour des commandes hydrauliques, comme des moteurs (40) oscillants et des vérins (10) différentiels dans des véhicules automobiles, ayant un dispositif (12) d'alimentation hydraulique, qui a au moins un raccord (P) de pompe et un raccord (T) de cuve et des conduits (24, 26) de liaison fluidiques entre la commande hydraulique respective et les raccords (P, T), **caractérisé en ce que** dans chaque conduit (24, 26) de liaison est montée une vanne de régulation de la pression, notamment une vanne (28) de régulation de la pression proportionnelle, de préférence du même type de construction.

2. Dispositif de commande hydraulique suivant la revendication 1, **caractérisé en ce que** les diverses vannes (28) de régulation de la pression proportionnelles sont reliées sur leur côté d'entrée respectif, d'une part fluidiquement au raccord (P) de pompe, et d'autre part, au raccord (T) de cuve et **en ce que** les côtés d'entrée ayant le raccord (P) de pompe sont reliés fluidiquement entre eux et séparément aux côtés d'entrée ayant le raccord (T) de cuve, qui sont à nouveau en liaison fluidiquement entre eux.

3. Dispositif de commande hydraulique suivant la revendication 1 ou 2, **caractérisé en ce que**, entre la vanne (28) respective de régulation de la pression proportionnelle et le raccord (P) de pompe du dispositif (12) d'alimentation hydraulique, est raccordé sur au moins un conduit (24) fluidique, au moins un hydroaccumulateur (34), notamment un accumulateur à membrane.

4. Dispositif de commande hydraulique suivant la revendication 3, **caractérisé en ce que** l'hydroaccumulateur (34) est protégé par un clapet anti-retour (36) qui bloque dans la direction de l'unité (12) d'alimentation.

5. Dispositif de commande hydraulique suivant l'une des revendications 1 à 4, **caractérisé en ce que**, dans chaque conduit (24, 26) fluidique, il est disposé entre les vannes (28) de régulation de la pression proportionnelles et les hydrocommandes (10, 40) un capteur (32) de pression, qui transmet ses données de mesures à une commande qui, munie d'un programme de commande, effectue au moyen de courbes caractéristiques internes de commande, la commande des vannes (28) de régulation de la pression proportionnelles en vue d'effectuer une régulation de conduite et/ou une régulation de mécanisme de roulement.

6. Dispositif de commande hydraulique suivant l'une des revendications 3 à 5, **caractérisé en ce qu'**il est monté entre le dispositif (12) d'alimentation hydraulique et l'hydroaccumulateur (34), entre les conduits (24, 26) de liaison fluidiques du raccord (P) de pompe et du raccord (T) de cuve, une vanne de commutation, notamment une vanne (38) de dérivation proportionnelle.

7. Dispositif de commande hydraulique suivant l'une des revendications 1 à 6, **caractérisé en ce que**, pour une régulation active du mécanisme de roulement tant de l'essieu avant que de l'essieu arrière, il est associé respectivement une paire de vannes (28) de régulation de la pression proportionnelles pareillement conformées et **en ce que** toutes les vannes (28) de régulation de la pression proportionnelles sont montées en parallèle entre elles.
